# EUROPEAN PATENT APPLICATION

(11) **EP 4 835 602 A1**
(43) Date of publication of application: **04.11.2026**
(21) Application number: 24935870.6
(22) Date of filing: 11.12.2024
(51) Int. Cl.: G05D 1/667, G01B 11/24, G01B 11/26, G05D 1/43, G05D 1/242

(54) **PALLET DETECTION DEVICE, PALLET DETECTION METHOD, AND PALLET DETECTION PROGRAM**

(30) Priority: 15.04.2024 JP 2024065600
(71) Applicant: JFE Steel Corporation, Tokyo 100-0011 (JP)
(72) Inventor: KANETA, Yusuke, Sapporo-shi Hokkaido 006-0835 (JP); TANAKA, Yoshiki, Sapporo-shi Hokkaido 006-0835 (JP); KOHARA, Toshiyuki, Tokyo 100-0011 (JP); NAKASHIMA, Atsuhiro, Tokyo 100-0011 (JP)
(74) Representative: Grünecker Patent- und Rechtsanwälte PartG mbB
(86) International application number: PCT/JP2024/043882
(87) International publication number: WO 2025/220272

(57) **Abstract**

A pallet detection device includes an optical detector and a processing circuit. The optical detector outputs point group data corresponding to a detection target and represented by a two-dimensional coordinate system including an X-axis extending along the width direction of a carrier pallet vehicle and a Y-axis orthogonal to the X-axis and extending along the longitudinal direction of the carrier pallet vehicle. The processing circuit calculates, when determining that the detection target is a pair of legs of a pallet, a first virtual point based on first point group data corresponding to one leg in the pair of legs and a second virtual point based on second point group data corresponding to the other leg in the pair of legs, and calculates a center point of a line segment connecting the first and second virtual points as a target point towards which the carrier pallet vehicle is to move.

## Description

### TECHNICAL FIELD

The present disclosure relates to a pallet detection device, a pallet detection method, and a pallet detection program.

### BACKGROUND

Patent literature (PTL) 1 describes a device for detecting pallets. In this device, first, approximate positional information regarding the approximate position of a pallet relative to a carrier pallet vehicle is obtained. Next, detection light is projected from the carrier pallet vehicle onto a pair of legs of the pallet, and reflected light of the detection light is received, whereby a plurality of detection data points related to reflection points is acquired. Next, from the plurality of detection data points, corner points are detected within point group data, which is a collection of reflection points. The corner points are reflection points at which the parallel direction of the point group data changes. Next, the point group data is divided into a plurality of groups separated by corner points. Next, the plurality of groups is classified into horizontal groups arranged in the width direction of the pallet and vertical groups arranged in the depth direction of the pallet, based on the approximate positional information. Finally, using a plurality of detection data points belonging to at least one of the vertical group and horizontal group, a center line passing through the center of the pallet in the width direction and extending in the length direction of the pallet is derived.

### CITATION LIST

### Patent Literature

PTL 1: JP 2022-188455 A

### SUMMARY

### (Technical Problem)

PTL 1 requires relatively complex calculations, such as classifying the plurality of detection data points into the vertical group and horizontal group at each leg, which makes the processing complex.

An object of the present disclosure is to provide a pallet detection device that can easily calculate the target point towards which a carrier pallet vehicle is to move.

### (Solution to Problem)

A pallet detection device according to an embodiment of the present disclosure is a device for detecting a pallet, the pallet including a loading portion on which a heavy object is loaded, and a plurality of legs supporting the loading portion, the plurality of legs including a pair of legs that are spaced apart from each other in a width direction of the pallet at a longitudinal end of the pallet, the pallet detection device including an optical detector configured to, when mounted on a carrier pallet vehicle, receive light reflected by a detection target located in an area surrounding the carrier pallet vehicle, and output point group data corresponding to the detection target, the point group data being represented by a two-dimensional coordinate system including an X-axis extending along a width direction of the carrier pallet vehicle and a Y-axis orthogonal to the X-axis and extending along a longitudinal direction of the carrier pallet vehicle, and a processing circuit connected to the optical detector, wherein the processing circuit is configured to acquire the point group data from the optical detector, determine, based on the point group data, whether the detection target is the pair of legs, calculate, when it is determined that the detection target is the pair of legs, a first virtual point having, as a first X-coordinate, an X-coordinate of a first point among first point group data corresponding to one leg in the pair of legs within the point group data, the first point being closest to another leg in the pair of legs in an X-direction, and having, as a first Y-coordinate, a Y-coordinate of a second point among the first point group data, the second point being closest to the carrier pallet vehicle in a Y-direction, calculate, when it is determined that the detection target is the pair of legs, a second virtual point having, as a second X-coordinate, an X-coordinate of a third point among second point group data corresponding to the other leg in the pair of legs within the point group data, the third point being closest to the one leg in the pair of legs in the X-direction, and having, as a second Y-coordinate, a Y-coordinate of a fourth point among the second point group data, the fourth point being closest to the carrier pallet vehicle in the Y-direction, and calculate a center point of a line segment connecting the first virtual point and the second virtual point as a target point towards which the carrier pallet vehicle is to move.

A pallet detection method according to an embodiment of the present disclosure is a method for detecting a pallet, the pallet including a loading portion on which a heavy object is loaded, and a plurality of legs supporting the loading portion, the plurality of legs including a pair of legs that are spaced apart from each other in a width direction of the pallet at a longitudinal end of the pallet, the pallet detection method including acquiring point group data from an optical detector configured to, when mounted on a carrier pallet vehicle, receive light reflected by a detection target located in an area surrounding the carrier pallet vehicle, and output point group data corresponding to the detection target, the point group data being represented by a two-dimensional coordinate system including an X-axis extending along a width direction of the carrier pallet vehicle and a Y-axis orthogonal to the X-axis and extending along a longitudinal direction of the carrier pallet vehicle, determining, based on the point group data, whether the detection target is the pair of legs, calculating, when it is determined that the detection target is the pair of legs, a first virtual point having, as a first X-coordinate, an X-coordinate of a first point among first point group data corresponding to one leg in the pair of legs within the point group data, the first point being closest to another leg in the pair of legs in an X-direction, and having, as a first Y-coordinate, a Y-coordinate of a second point among the first point group data, the second point being closest to the carrier pallet vehicle in a Y-direction, calculating, when it is determined that the detection target is the pair of legs, a second virtual point having, as a second X-coordinate, an X-coordinate of a third point among second point group data corresponding to the other leg in the pair of legs within the point group data, the third point being closest to the one leg in the pair of legs in the X-direction, and having, as a second Y-coordinate, a Y-coordinate of a fourth point among the second point group data, the fourth point being closest to the carrier pallet vehicle in the Y-direction, and calculating a center point of a line segment connecting the first virtual point and the second virtual point as a target point towards which the carrier pallet vehicle is to move.

A pallet detection program according to an embodiment of the present disclosure is configured to cause a processor to execute the aforementioned pallet detection method. The program may be stored in a storage medium readable by a computer. The storage medium is a non-transitory, tangible medium. The storage medium may be built into or externally connected to the computer. The computer encompasses, for example, mobile information terminals, personal computers, and servers. The storage medium encompasses RAM, ROM, EEPROM, external storage devices, and the like. The storage medium may, for example, be a hard disk, flash memory, optical disc, or the like. The program stored in the storage medium may be executed on a computer to which the storage medium is directly connected or on a computer connected to the storage medium via a communication network. Communication networks include, for example, Local Area Networks (LANs) or the Internet.

According to one aspect of the present disclosure, a pallet detection device can easily calculate the target point towards which a carrier pallet vehicle is to move.

### BRIEF DESCRIPTION OF THE DRAWINGS

In the accompanying drawings:
FIG. 1 is a schematic diagram of a carrier pallet vehicle, provided with a pallet detection device according to an embodiment, and a pallet;
FIG. 2 is a block diagram of a control system for the carrier pallet vehicle;
FIG. 3 is a flowchart of processing performed by a processing circuit of the pallet detection device according to the embodiment;
FIG. 4 is a schematic diagram illustrating point group data, a first virtual point, a second virtual point, and a center point as a target point; and
FIG. 5 is a schematic diagram illustrating a carrier pallet vehicle traveling towards a target point.

### DETAILED DESCRIPTION

Embodiments will be described below with reference to the drawings.

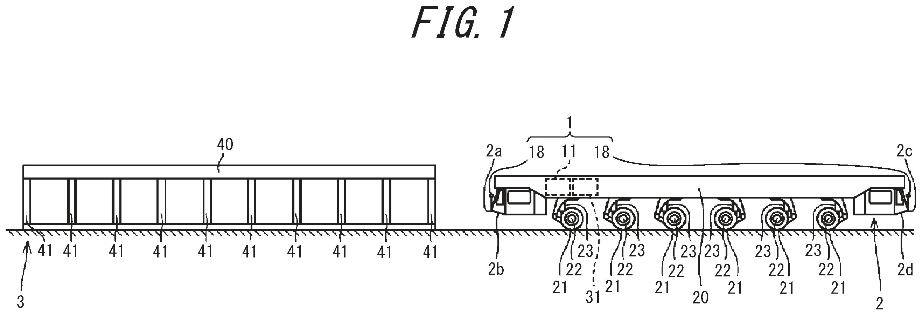

FIG. 1 is a schematic diagram of a carrier pallet vehicle 2, provided with a pallet detection device according to an embodiment, and a pallet 3. The pallet detection device 1 detects the pallet 3 arranged in the area surrounding the carrier pallet vehicle 2. The pallet detection device 1 includes a first computer 11 and at least one optical detector 18. Details of the first computer 11 and at the least one optical detector 18 will be described later.

The carrier pallet vehicle 2 includes a loading platform 20 and a plurality of tires 21 that support the loading platform 20. The loading platform 20 is capable of carrying the pallet 3. The plurality of tires 21 includes a plurality of pairs of tires 21. Each pair of tires 21 is connected to a separate axle 22. A hydraulic lifting cylinder 23 is individually provided between the loading platform 20 and each axle 22. The loading platform 20 is raised and lowered by the extension and retraction of each lifting cylinder 23.

The pallet 3 comprises a loading portion 40 on which heavy objects are loaded and a plurality of legs 41 that support the loading portion 40. The pallet 3 is defined by a longitudinal direction, a width direction, and a height direction that are perpendicular to each other. The height direction is perpendicular to the ground. The number of legs 41 is, for example, 20. In the present embodiment, each of the plurality of legs 41 is an H-shaped steel member. Each leg 41 extends along the height direction so that a cross-section perpendicular to the height direction is H-shaped. Each leg 41 is fixed to the loading portion 40. The plurality of legs 41 includes a plurality of pairs of legs 41. The legs 41 in each pair of legs 41 are disposed at the same position in the longitudinal direction of the pallet 3 and are spaced apart from each other in the width direction of the pallet 3. The pairs of legs 41 are disposed at intervals along the longitudinal direction of the pallet 3. The plurality of pairs of legs 41 include pairs of legs 41 disposed at the longitudinal ends of the pallet 3.

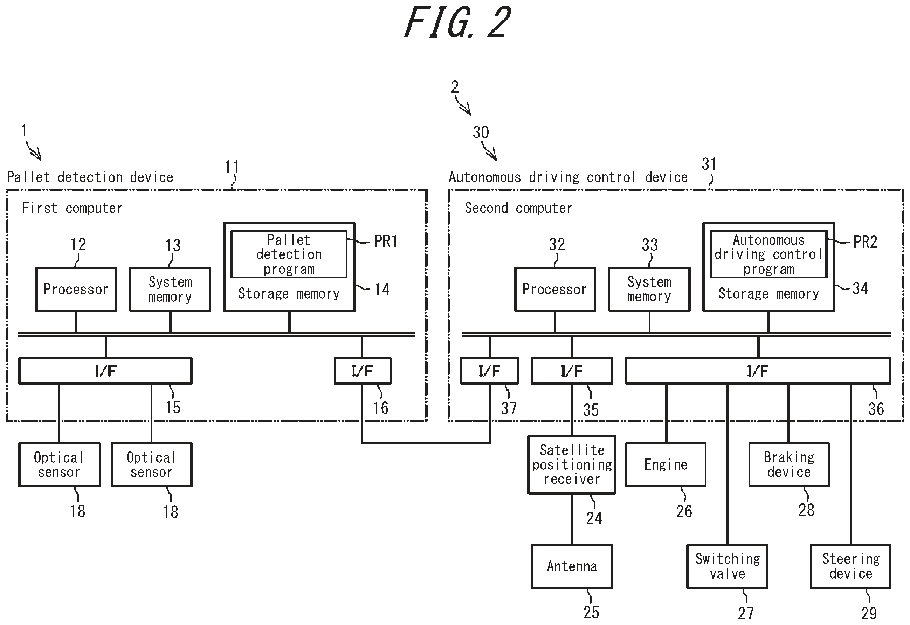

FIG. 2 is a block diagram of a control system for the carrier pallet vehicle 2. FIG. 2 illustrates an example in which the pallet detection device 1 is configured by a first computer 11 and an autonomous driving control device 30 is configured by a second computer 31 that is different from the first computer 11. However, the pallet detection device 1 and the autonomous driving control device 30 may be configured by a single computer. The carrier pallet vehicle 2 further includes an autonomous driving control device 30, a satellite positioning receiver 24, an antenna 25, an engine 26, a switching valve 27, a braking device 28, and a steering device 29.

The autonomous driving control device 30 receives positional information via the antenna 25 using the satellite positioning receiver 24. The satellite positioning receiver 24 and antenna 25 form part of a satellite positioning system. Satellite positioning systems include, for example, Real Time Kinematic-Global Navigation Satellite System (RTK-GNSS) and Quasi-zenith Satellite System. The autonomous driving control device 30 adjusts the speed, acceleration, and deceleration of the carrier pallet vehicle 2 by controlling the engine 26. The driving energy from the engine 26 is used to rotate the tires 21. The driving energy from the engine 26 is also used to drive the hydraulic pump connected to the lifting cylinder 23 via the switching valve 27. The autonomous driving control device 30 raises and lowers the loading platform 20 by extending and retracting the lifting cylinder 23 by controlling the switching valve 27. The autonomous driving control device 30 controls the braking device 28 to apply braking to the carrier pallet vehicle 2. The autonomous driving control device 30 controls the steering device 29 to adjust the steering angle of the carrier pallet vehicle 2.

The autonomous driving control device 30 may, depending on the relative positional relationship between the carrier pallet vehicle 2 and the pallet 3, drive the carrier pallet vehicle 2 autonomously with one end in the longitudinal direction of the carrier pallet vehicle 2 as the front end, or drive the carrier pallet vehicle 2 autonomously with the other end in the longitudinal direction of the carrier pallet vehicle 2 as the front end.

The autonomous driving control device 30 includes the second computer 31. The second computer 31 is communicably connected to the satellite positioning receiver 24, the engine 26, the braking device 28, and the steering device 29 via electrical cables or wireless communication devices. The second computer 31 includes a processor 32, system memory 33, storage memory 34, and interfaces (I/F) 35 to 37. The processor 32 is, for example, a microcontroller unit (MPU) or a central processing unit (CPU). The processor 32 may be distributed among a plurality of processors. The system memory 33 is, for example, RAM. The storage memory 34 is an example of a computer-readable medium and is a non-transitory, tangible medium. The storage memory 34 may include ROM, EEPROM, a hard disk, flash memory, an optical disc, or a combination thereof.

The storage memory 34 stores an autonomous driving control program PR2. The processor 32 reads the autonomous driving control program PR2 from the storage memory 34 into the system memory 33 and executes the autonomous driving control program PR2. The configuration in which the processor 32 executes the autonomous driving control program PR2 read into the system memory 33 is an example of a processing circuit of the autonomous driving control device 30. The second computer 31 can be an example of a processing circuit. Part or all of the autonomous driving control program PR2 may be executed by a processing circuit on a server connected to the autonomous driving control device 30 via a network.

Positional information received by the satellite positioning receiver 24 via the antenna 25 is input to the interface 35. The interface 36 outputs drive commands, generated by the processor 32 in accordance with the autonomous driving control program PR2, to the engine 26, the braking device 28, and the steering device 29. The interface 37 is an I/O interface that receives data such as the below-described target point TP, which is output from the interface 16 of the pallet detection device 1.

The pallet detection device 1 includes a first computer 11 and at least one optical detector 18. In the present embodiment, the at least one optical detector 18 includes a pair of optical detectors 18. The first computer 11 is communicably connected to each of the pair of optical detectors 18 via an electrical cable or wireless communication device. Each of the pair of optical detectors 18 has the same structure. The first computer 11 includes a processor 12, a system memory 13, a storage memory 14, and interfaces 15, 16. The processor 12 is, for example, a microcontroller unit (MPU) or a central processing unit (CPU). The processor 12 may be distributed among a plurality of processors. The system memory 13 is, for example, RAM. The storage memory 14 is an example of a computer-readable medium and is a non-transitory, tangible medium. The storage memory 14 may include ROM, EEPROM, a hard disk, flash memory, an optical disc, or a combination thereof.

The storage memory 14 stores a pallet detection program PR1. The processor 12 reads the pallet detection program PR1 from the storage memory 14 into the system memory 13 and executes the pallet detection program PR1. The configuration in which the processor 12 executes the pallet detection program PR1 read into the system memory 13 is an example of a processing circuit of the pallet detection device 1. The first computer 11 can be an example of a processing circuit. Part or all of the pallet detection program PR1 may be executed by a processing circuit on a server connected to the pallet detection device 1 via a network.

The interface 15 receives point group data PG corresponding to a detection target from each of the pair of optical detectors 18. The interface 16 is an I/O interface that outputs data, such as the below-described target point TP calculated based on commands generated by the processor 12 according to the pallet detection program PR1, to the interface 37 of the autonomous driving control device 30. The interface 16 of the first computer 11 and the interface 37 of the second computer 31 are connected to be capable of data communication with each other. The interface 16 of the first computer 11 and the interface 37 of the second computer 31 are communicably connected via an electrical cable or wireless communication device.

Each of the pair of optical detectors 18, when mounted on the carrier pallet vehicle 2, receives light reflected by a detection target located in the area surrounding the carrier pallet vehicle 2. One of the pair of optical detectors 18 is mounted on one end 2a in the longitudinal direction of the carrier pallet vehicle 2, in a central portion 2b in the width direction of the carrier pallet vehicle 2. The other of the pair of optical detectors 18 is mounted on the other end 2c in the longitudinal direction of the carrier pallet vehicle 2, in a central portion 2d in the width direction of the carrier pallet vehicle 2. For example, each of the pair of optical detectors 18 can be a 2D-Light Detection And Ranging (LiDAR) capable of measuring distance by scanning laser light horizontally.

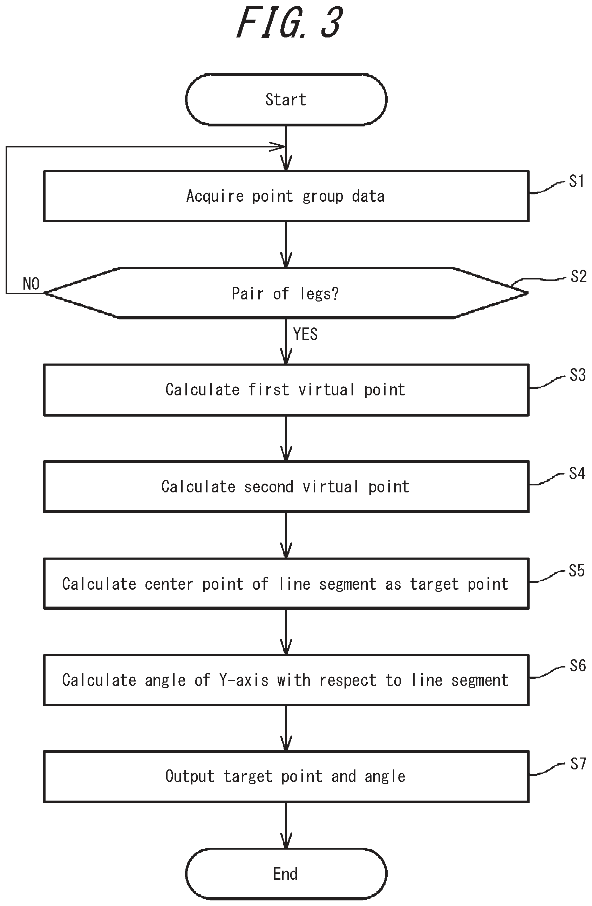

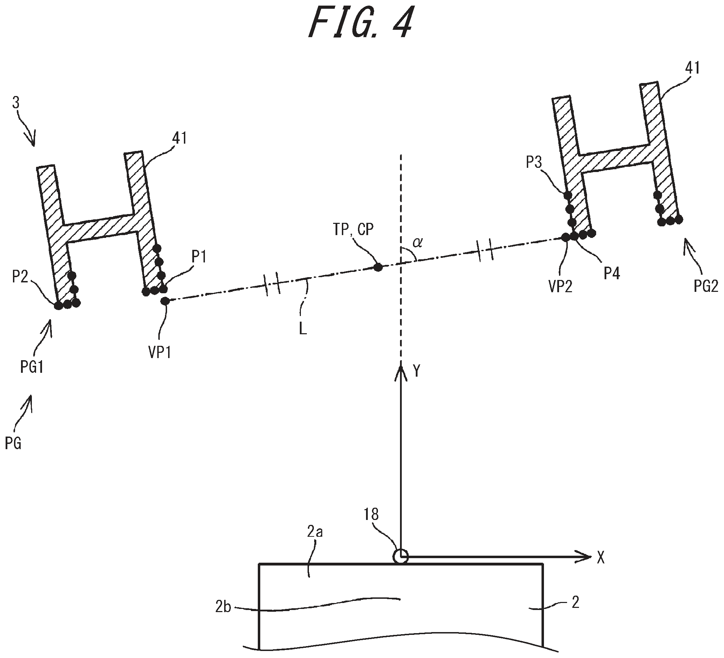

FIG. 3 is a flowchart of processing performed by the processing circuit of the pallet detection device 1 according to the embodiment. The procedures of the method of detecting the pallet 3 by the pallet detection device 1 are described below following the flow illustrated in FIG. 3, with reference mainly to FIG. 4, as well as to FIGS. 1 and 2 as appropriate. The processor 12 executes the pallet detection program PR1 that was read into the system memory 13. The processor 12 may, for example, operate only the optical detector 18, in the pair of optical detectors 18, that is closer to the pallet 3 to be transported, in accordance with the positional information for the carrier pallet vehicle 2 and the positional information for the pallet 3.

FIG. 4 is a schematic diagram illustrating point group data PG, a first virtual point VP1, a second virtual point VP2, and a center point CP as a target point TP. First, the processor 12 acquires the point group data PG corresponding to the detection target from one optical detector 18 (step S1). The point group data PG is represented by a two-dimensional coordinate system including an X-axis extending along the width direction of the carrier pallet vehicle 2 and a Y-axis orthogonal to the X-axis and extending along the longitudinal direction of the carrier pallet vehicle 2. In the present embodiment, the origin of the two-dimensional coordinate system is set to the mounting position of the optical detector 18.

The processor 12 may start acquiring the point group data PG when the carrier pallet vehicle 2, traveling by autonomous driving, reaches a position within a predetermined range from the pallet 3 to be transported. The processor 12 may start acquiring the point group data PG before the carrier pallet vehicle 2 is located within a predetermined range from the pallet 3. The processor 12 may acquire the point group data PG in a cycle of, for example, 20 milliseconds.

Next, the processor 12 determines whether the detection target is a pair of legs 41 of the pallet 3 based on the point group data PG acquired in step S1 (step S2). For example, the storage memory 14 stores data indicating the shape and dimensions of each of pair of legs 41 of the pallet 3 and the spacing between one pair of legs 41. The processor 12 determines whether the detection target indicated by the point group data PG is a pair of legs 41 of the pallet 3 by performing pattern matching, for example, by comparing the detection target indicated by the point group data PG with reference data stored in the storage memory 14. The processor 12 may apply a median filter to the point group data PG acquired in step S1 to remove noise and then proceed to step S2. When not determining in step S2 that the detection target is a pair of legs 41 of the pallet 3 (step S2: NO), the processor 12 returns to the procedure in step S1.

Next, when determining in step S2 that the detection target is a pair of legs 41 of the pallet 3 (step S2: YES), the processor 12 calculates the first virtual point VP1 (step S3). The first virtual point VP1 is a virtual point having, as a first X-coordinate, an X-coordinate X1max of a first point P1 among first point group data PG1 corresponding to one leg 41 in the pair of legs 41 within the point group data PG, the first point P1 being closest to the other leg 41 in the pair of legs 41 in the X-direction, and having, as a first Y-coordinate, a Y-coordinate Y1min of a second point P2 among the first point group data PG1, the second point P2 being closest to the carrier pallet vehicle 2 in the Y-direction.

Next, the processor 12 calculates the second virtual point VP2 (step S4). The second virtual point VP2 is a virtual point having, as a second X-coordinate, an X-coordinate X2min of a third point P3 among second point group data PG2 corresponding to the other leg 41 in the pair of legs 41 within the point group data PG, the third point P3 being closest to the one leg 41 in the pair of legs 41 in the X-direction, and having, as a second Y-coordinate, a Y-coordinate Y2min of a fourth point P4 among the second point group data PG2, the fourth point P4 being closest to the carrier pallet vehicle 2 in the Y-direction.

Next, the processor 12 calculates the center point CP of a line segment L connecting the first virtual point VP1 calculated in step S3 and the second virtual point VP2 calculated in step S4 as the target point TP towards which the carrier pallet vehicle 2 is to move (step S5). In step S5, the processor 12 calculates the X-coordinate of the center point CP by calculating the relational expression (X1max + X2min)/2 and calculates the Y-coordinate of the center point CP by calculating the relational expression (Y1min + Y2min)/2.

Next, the processor 12 calculates an angle α of the Y-axis with respect to the line segment L (step S6).

Finally, the processor 12 outputs the X-coordinate and Y-coordinate of the center point CP, which is the target point TP calculated in step S5, and the angle α calculated in step S6, to the autonomous driving control device 30 (step S7). In step S7, the processor 12 may further output the point group data PG acquired in step S1 to the autonomous driving control device 30.

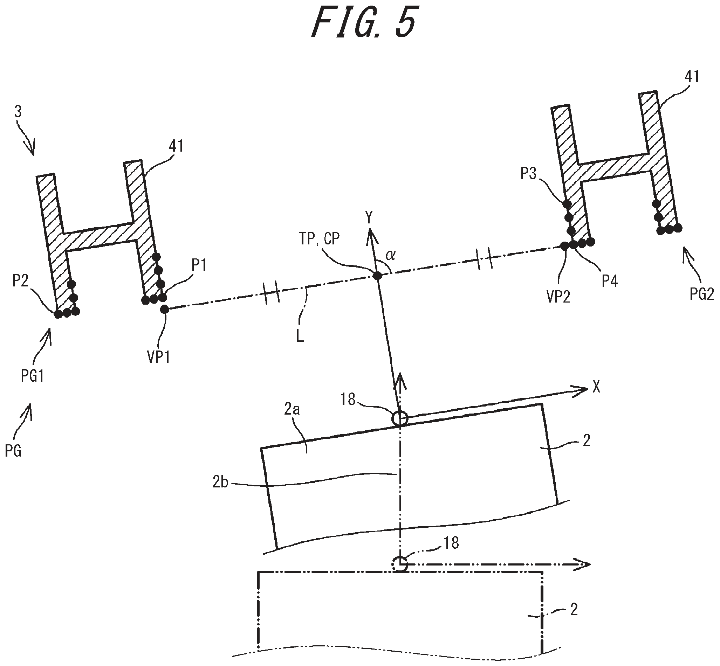

FIG. 5 is a schematic diagram illustrating the carrier pallet vehicle 2 traveling towards the target point TP. As illustrated in FIG. 5, the autonomous driving control device 30 autonomously drives the carrier pallet vehicle 2 so that the Y-axis is perpendicular to the line segment L and the center of the carrier pallet vehicle 2 in the width direction faces the target point TP, based on the X-coordinate and Y-coordinate of the target point TP and the angle α received from the pallet detection device 1. After retracting the lifting cylinder 23 and lowering the loading platform 20, the autonomous driving control device 30 drives the carrier pallet vehicle 2 towards the target point TP by autonomous driving.

When one pair of legs 41 moves out of the detection range of the optical detector 18 as a result of the carrier pallet vehicle 2 approaching the target point TP, the optical detector 18 can detect another pair of legs 41 adjacent to the pair of legs 41 in the longitudinal direction of the pallet 3 and output the target point TP and angle α with respect to the other pair of legs 41 to the autonomous driving control device 30 by the same procedure as in steps S1 to S7. The autonomous driving control device 30 can drive the carrier pallet vehicle 2 towards the target point TP related to the other pair of legs 41 by autonomous driving. By repeating the above procedure, the carrier pallet vehicle 2 can properly enter the area below the pallet 3 while avoiding collision with the plurality of legs 41 of the pallet 3.

Next, the autonomous driving control device 30 extends the lifting cylinder 23 to raise the loading platform 20, thereby placing the pallet 3 onto the loading platform 20. Next, the autonomous driving control device 30 drives the carrier pallet vehicle 2 by autonomous driving to the location at which the pallet 3 is to be transported. Finally, the autonomous driving control device 30 lowers the loading platform 20 by retracting the lifting cylinder 23 at the location to which the pallet 3 is to be transported, thereby placing the pallet 3 at the location.

According to the configuration of the present embodiment, the first virtual point VP1 is calculated based on the first point group data PG1 corresponding to one leg 41 in the pair of legs 41 of the pallet 3, the second virtual point VP2 is calculated based on the second point group data PG2 corresponding to the other leg 41 in the pair of legs 41 of the pallet 3, and the center point CP of the line segment L connecting the first virtual point VP1 and the second virtual point VP2 is calculated to determine the target point TP towards which the carrier pallet vehicle 2 is to move. Therefore, the pallet detection device 1 can easily calculate the target point TP with relatively simple calculations. Furthermore, the pallet detection device 1 can calculate the target point TP regardless of the spacing between one leg 41 in the pair of legs 41 and the other leg 41 in the pair of legs 41. Furthermore, the pallet detection device 1 can calculate the target point TP regardless of the shape of each of the pair of legs 41.

Since the angle α of the Y-axis with respect to the line segment L connecting the first virtual point VP1 and the second virtual point VP2 is calculated, the autonomous driving control device 30 can drive the carrier pallet vehicle 2 autonomously based on the angle α so that the Y-axis is perpendicular to the line segment L. This prevents the carrier pallet vehicle 2 from being inclined relative to the pallet 3, as viewed from above, upon reaching the target point TP. Therefore, the carrier pallet vehicle 2 can properly enter under the pallet 3. The autonomous driving control device 30 may cause an emergency stop of the carrier pallet vehicle 2 in the case of determining that the angle α of the Y-axis with respect to the line segment L is greater than a threshold. This prevents the carrier pallet vehicle 2 from colliding with the plurality of legs 41 of the pallet 3.

Since the optical detector 18 is mounted at the longitudinal end of the carrier pallet vehicle 2 in the central portion in the width direction of the carrier pallet vehicle 2, and the origin of the two-dimensional coordinate system is set to the mounting position of the optical detector 18, the pallet detection device 1 can easily calculate the target point TP towards which the carrier pallet vehicle 2 is to move.

Since the optical detector 18 includes a 2D-LiDAR, the pallet detection device 1 can detect point group data PG corresponding to the pair of legs 41 of the pallet 3 with a relatively inexpensive configuration.

In the present embodiment, the case in which the optical detector 18 is mounted on the longitudinal end of the carrier pallet vehicle 2 in the central portion in the width direction of the carrier pallet vehicle 2 has been described. The mounting position of the optical detector 18 is not limited to the position described in the present embodiment, as long as a detection target located in the area surrounding the carrier pallet vehicle 2 can be properly detected. For example, the optical detector 18 may be mounted on the longitudinal end of the carrier pallet vehicle 2 at an edge in the width direction of the carrier pallet vehicle 2 or may be mounted on another part of the carrier pallet vehicle 2. For example, the storage memory 14 may store data indicating the relative position of the optical detector 18 with respect to the longitudinal end of the carrier pallet vehicle 2 and the central portion in the width direction of the carrier pallet vehicle 2. By using data indicating relative positions, the origin of the two-dimensional coordinate system can be set to the longitudinal end of the carrier pallet vehicle 2 in the central portion in the width direction of the carrier pallet vehicle 2 based on the data indicating relative positions, rather than to the mounting position of the optical detector 18.

In the present embodiment, the case in which the pallet detection device 1 calculates the angle α of the Y-axis with respect to the line segment L, and the autonomous driving control device 30 drives the carrier pallet vehicle 2 by autonomous driving so that the Y-axis is perpendicular to the line segment L, has been described. However, the pallet detection device 1 may calculate the angle of the X-axis with respect to the line segment L, and the autonomous driving control device 30 may autonomously drive the carrier pallet vehicle 2 so that the X-axis is parallel to the line segment L.

In the present embodiment, the case in which the optical detector 18 includes a 2D-LiDAR has been described. However, the optical detector 18 may include a Laser Range Finder (LRF) instead of a 2D-LiDAR, as long as the optical detector 18 can output point group data corresponding to the detection target that is located in the area surrounding the carrier pallet vehicle 2.

In the present embodiment, the case in which step S3 to calculate the first virtual point VP1 is first performed, followed by step S4 to calculate the second virtual point VP2, has been described based on the flowchart in FIG. 3. However, step S3 may be performed after step S4 has been performed, or steps S3 and S4 may be performed in parallel.

In the present embodiment, the case in which the pallet detection device 1 includes a pair of optical detectors 18 has been described. However, one of the pair of optical detectors 18 may be omitted.

The functions of the elements disclosed herein can be performed using circuits or processing circuits, including general-purpose processors, dedicated processors, integrated circuits, Application Specific Integrated Circuits (ASICs), conventional circuits, and/or combinations thereof, configured or programmed to perform the disclosed functions. A processor is considered a processing circuit or circuitry by virtue of including transistors and other circuits. In the present disclosure, a circuit, unit, or means refers to hardware that performs the listed functions, or hardware that is programmed to perform the listed functions. The hardware may be any hardware disclosed herein, or any other known hardware that is programmed or configured to perform the listed functions. If the hardware is a processor, which can be considered a type of circuit, then the circuit, means, or unit is a combination of hardware and software, and the software is used to configure the hardware and/or the processor.

Each of the following aspects discloses a preferred embodiment.

### [Aspect 1]

A pallet detection device for detecting a pallet,
the pallet comprising a loading portion on which a heavy object is loaded, and a plurality of legs supporting the loading portion, the plurality of legs including a pair of legs that are spaced apart from each other in a width direction of the pallet at a longitudinal end of the pallet,
the pallet detection device comprising:
   an optical detector configured to, when mounted on a carrier pallet vehicle, receive light reflected by a detection target located in an area surrounding the carrier pallet vehicle, and output point group data corresponding to the detection target, the point group data being represented by a two-dimensional coordinate system including an X-axis extending along a width direction of the carrier pallet vehicle and a Y-axis orthogonal to the X-axis and extending along a longitudinal direction of the carrier pallet vehicle; and
   a processing circuit connected to the optical detector, wherein
   the processing circuit is configured to
      acquire the point group data from the optical detector,
      determine, based on the point group data, whether the detection target is the pair of legs,
      calculate, when it is determined that the detection target is the pair of legs, a first virtual point having, as a first X-coordinate, an X-coordinate of a first point among first point group data corresponding to one leg in the pair of legs within the point group data, the first point being closest to another leg in the pair of legs in an X-direction, and having, as a first Y-coordinate, a Y-coordinate of a second point among the first point group data, the second point being closest to the carrier pallet vehicle in a Y-direction,
      calculate, when it is determined that the detection target is the pair of legs, a second virtual point having, as a second X-coordinate, an X-coordinate of a third point among second point group data corresponding to the other leg in the pair of legs within the point group data, the third point being closest to the one leg in the pair of legs in the X-direction, and having, as a second Y-coordinate, a Y-coordinate of a fourth point among the second point group data, the fourth point being closest to the carrier pallet vehicle in the Y-direction, and
      calculate a center point of a line segment connecting the first virtual point and the second virtual point as a target point towards which the carrier pallet vehicle is to move.

### [Aspect 2]

The pallet detection device according to aspect 1, wherein the processing circuit is configured to calculate an angle of the X-axis or the Y-axis with respect to the line segment.

### [Aspect 3]

The pallet detection device according to aspect 1 or 2, wherein
the optical detector is mounted at the longitudinal end of the carrier pallet vehicle, in a central portion in the width direction of the carrier pallet vehicle, and
an origin of the two-dimensional coordinate system is set to a mounting position of the optical detector.

### [Aspect 4]

The pallet detection device according to any one of aspects 1 to 3, wherein the optical detector includes a 2D-Light Detection And Ranging (LiDAR) capable of measuring distance by scanning laser light horizontally.

### [Aspect 5]

A pallet detection method for detecting a pallet,
the pallet comprising a loading portion on which a heavy object is loaded, and a plurality of legs supporting the loading portion, the plurality of legs including a pair of legs that are spaced apart from each other in a width direction of the pallet at a longitudinal end of the pallet,
the method comprising:
   acquiring point group data from an optical detector configured to, when mounted on the carrier pallet vehicle, receive light reflected by a detection target located in an area surrounding the carrier pallet vehicle, and output point group data corresponding to the detection target, the point group data being represented by a two-dimensional coordinate system including an X-axis extending along a width direction of the carrier pallet vehicle and a Y-axis orthogonal to the X-axis and extending along a longitudinal direction of the carrier pallet vehicle;
   determining, based on the point group data, whether the detection target is the pair of legs;
   calculating, when it is determined that the detection target is the pair of legs, a first virtual point having, as a first X-coordinate, an X-coordinate of a first point among first point group data corresponding to one leg in the pair of legs within the point group data, the first point being closest to another leg in the pair of legs in an X-direction, and having, as a first Y-coordinate, a Y-coordinate of a second point among the first point group data, the second point being closest to the carrier pallet vehicle in a Y-direction;
   calculating, when it is determined that the detection target is the pair of legs, a second virtual point having, as a second X-coordinate, an X-coordinate of a third point among second point group data corresponding to the other leg in the pair of legs within the point group data, the third point being closest to the one leg in the pair of legs in the X-direction, and having, as a second Y-coordinate, a Y-coordinate of a fourth point among the second point group data, the fourth point being closest to the carrier pallet vehicle in the Y-direction; and
   calculating a center point of a line segment connecting the first virtual point and the second virtual point as a target point towards which the carrier pallet vehicle is to move.

### [Aspect 6]

A pallet detection program configured to cause a processor to execute the pallet detection method according to 5.

### REFERENCE SIGNS LIST

- 1: Pallet detection device
- 2: Carrier pallet vehicle
- 3: Pallet
- 12: Processor
- 18: Optical detector
- 40: Loading portion
- 41: Leg
- PG: Point group data
- PG1: First point group data
- PG2: Second point group data
- P1 to P4: First to fourth points
- TP: Target point
- CP: Center point
- VP1, 2: First, second virtual point
- L: Line segment
- α: Angle
- PR1: Pallet detection program

## Claims

1. A pallet detection device for detecting a pallet,
the pallet comprising a loading portion on which a heavy object is loaded, and a plurality of legs supporting the loading portion, the plurality of legs including a pair of legs that are spaced apart from each other in a width direction of the pallet at a longitudinal end of the pallet,
the pallet detection device comprising:
an optical detector configured to, when mounted on a carrier pallet vehicle, receive light reflected by a detection target located in an area surrounding the carrier pallet vehicle, and output point group data corresponding to the detection target, the point group data being represented by a two-dimensional coordinate system including an X-axis extending along a width direction of the carrier pallet vehicle and a Y-axis orthogonal to the X-axis and extending along a longitudinal direction of the carrier pallet vehicle; and
a processing circuit connected to the optical detector, wherein
the processing circuit is configured to
acquire the point group data from the optical detector,
determine, based on the point group data, whether the detection target is the pair of legs,
calculate, when it is determined that the detection target is the pair of legs, a first virtual point having, as a first X-coordinate, an X-coordinate of a first point among first point group data corresponding to one leg in the pair of legs within the point group data, the first point being closest to another leg in the pair of legs in an X-direction, and having, as a first Y-coordinate, a Y-coordinate of a second point among the first point group data, the second point being closest to the carrier pallet vehicle in a Y-direction,
calculate, when it is determined that the detection target is the pair of legs, a second virtual point having, as a second X-coordinate, an X-coordinate of a third point among second point group data corresponding to the other leg in the pair of legs within the point group data, the third point being closest to the one leg in the pair of legs in the X-direction, and having, as a second Y-coordinate, a Y-coordinate of a fourth point among the second point group data, the fourth point being closest to the carrier pallet vehicle in the Y-direction, and
calculate a center point of a line segment connecting the first virtual point and the second virtual point as a target point towards which the carrier pallet vehicle is to move.

2. The pallet detection device according to claim 1, wherein the processing circuit is configured to calculate an angle of the X-axis or the Y-axis with respect to the line segment.

3. The pallet detection device according to claim 1 or 2, wherein
the optical detector is mounted at the longitudinal end of the carrier pallet vehicle, in a central portion in the width direction of the carrier pallet vehicle, and
an origin of the two-dimensional coordinate system is set to a mounting position of the optical detector.

4. The pallet detection device according to any one of claims 1 to 3, wherein the optical detector includes a 2D-Light Detection And Ranging capable of measuring distance by scanning laser light horizontally.

5. A pallet detection method for detecting a pallet,
the pallet comprising a loading portion on which a heavy object is loaded, and a plurality of legs supporting the loading portion, the plurality of legs including a pair of legs that are spaced apart from each other in a width direction of the pallet at a longitudinal end of the pallet,
the pallet detection method comprising:
acquiring point group data from an optical detector configured to, when mounted on a carrier pallet vehicle, receive light reflected by a detection target located in an area surrounding the carrier pallet vehicle, and output point group data corresponding to the detection target, the point group data being represented by a two-dimensional coordinate system including an X-axis extending along a width direction of the carrier pallet vehicle and a Y-axis orthogonal to the X-axis and extending along a longitudinal direction of the carrier pallet vehicle;
determining, based on the point group data, whether the detection target is the pair of legs;
calculating, when it is determined that the detection target is the pair of legs, a first virtual point having, as a first X-coordinate, an X-coordinate of a first point among first point group data corresponding to one leg in the pair of legs within the point group data, the first point being closest to another leg in the pair of legs in an X-direction, and having, as a first Y-coordinate, a Y-coordinate of a second point among the first point group data, the second point being closest to the carrier pallet vehicle in a Y-direction;
calculating, when it is determined that the detection target is the pair of legs, a second virtual point having, as a second X-coordinate, an X-coordinate of a third point among second point group data corresponding to the other leg in the pair of legs within the point group data, the third point being closest to the one leg in the pair of legs in the X-direction, and having, as a second Y-coordinate, a Y-coordinate of a fourth point among the second point group data, the fourth point being closest to the carrier pallet vehicle in the Y-direction; and
calculating a center point of a line segment connecting the first virtual point and the second virtual point as a target point towards which the carrier pallet vehicle is to move.

6. A pallet detection program configured to cause a processor to execute the pallet detection method according to claim 5.
